# FASCICULE DE BREVET EUROPEEN

(11) **EP 0 911 276 B1**
(45) Date de publication et mention de la délivrance du brevet: **26.05.2004**
(21) Numéro de dépôt: 98402562.7
(22) Date de dépôt: 15.10.1998
(51) Int. Cl.: B65D 81/02

(54) **Boîte de calage en matériau alvéolaire, moule et procédé pour sa fabrication**
Schachtel aus geschaümtem Material, Herstellungsverfahren und Form dafür
Foam box with internal supporting means, method of manufacture and mould therefor

(30) Priorité: 20.10.1997 FR 9713104
(43) Date de publication de la demande: 28.04.1999
(73) Titulaire: Knauf, 68600 Wolfgantzen (FR)
(72) Inventeur: Pascal, René Claude, 68570 Soultzmatt (FR)
(74) Mandataire: Cabinet HERRBURGER

(56) Documents cités:
- EP-A- 0 122 545
- EP-A- 0 390 151
- WO-A-85/01468
- FR-A- 1 586 352
- FR-A- 2 715 955
- US-A- 3 491 914

## Description

La présente invention concerne une boîte de calage en un matériau alvéolaire, formée d'au moins deux éléments tels qu'un réceptacle et un couvercle.

L'invention concerne également un moule et un procédé pour la fabrication d'une telle boîte.

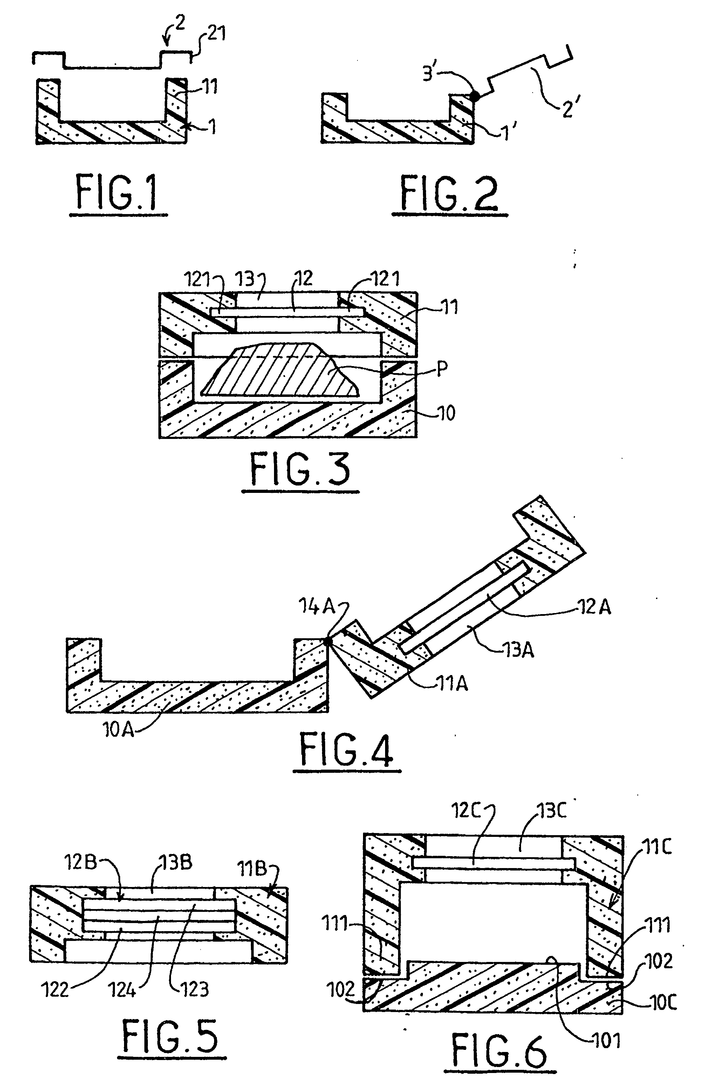

Les boîtes de calage en matériau alvéolaire tel que du polystyrène expansé (PSE) sont opaques. Il existe également des boîtes (figure 1) formées d'un réceptacle 1 recevant un couvercle 2 en matière transparente. Ce couvercle 2 se réalise par injection ou thermoformage. Il s'agit d'une feuille mince, éventuellement de même nature que le matériau alvéolaire. Dans le cas d'un réceptacle 1 en polystyrène expansé, le couvercle 2 peut être en polystyrène compact. Le couvercle 2 est muni d'un bord en forme de gorge périphérique pour coiffer le bord 11 du réceptacle 1. Mais ce couvercle 2, de très faible épaisseur, n'assure pas les mêmes fonctions que le matériau alvéolaire du réceptacle 1. Il n'assure ni la protection du dessus de la boîte contre les chocs ou l'écrasement ni l'isolation thermique. En outre, sur le plan logistique, il faut faire appel à deux technologies de transformation et donc deux fournisseurs, ce qui implique deux circuits de commande et d'approvisionnement.

Le couvercle est en général placé comme indiqué à la figure 1. Pour faire une boîte avec un couvercle à charnières comme la boîte de la figure 2, il faut assembler le couvercle transparent 2' au réceptacle 1' par une charnière 3' réalisée par une opération distincte de la fabrication du réceptacle l'et du couvercle 2'.

La présente invention a pour but de remédier à ces inconvénients et se propose de créer une boîte, notamment de calage, en matériau alvéolaire, permettant de voir le contenu de la boîte sans que cette boîte ne présente en fabrication une complexité ou n'entraîne une augmentation de coût pour la fabrication ou la matière.

Il est déjà connu selon le document FR 1 586 352-24/05/1968 de réaliser un emballage en matière cellulaire comportant un couvercle muni d'une glace ou d'un élément transparent. Cet élément transparent est accroché dans le bord d'une fenêtre réalisée dans le couvercle si l'emballage comporte un couvercle ou dans le bord du fond de l'emballage lorsque celui-ci ne comporte pas de couvercle.

Pour assurer l'accrochage et la pénétration du bord de l'élément transparent dans le couvercle, cet élément transparent comporte au niveau de son bord, des parties en saillie ou des dents d'arrêt et de blocage. Ces dents peuvent d'ailleurs être rapportées ou réalisées dans la matière de l'élément transparent.

Un tel emballage est relativement compliqué à utiliser ou à fabriquer puisqu'il faut deux opérations distinctes de fabrication et d'assemblage. De plus la fixation de l'élément transparent au couvercle n'est pas suffisante pour pouvoir utiliser cet emballage indépendamment de tout autre moyen de protection de la partie de la fenêtre.

A cet effet, l'invention concerne une boîte de calage en matériau alvéolaire du type défini ci-dessus, caractérisée en ce qu'au moins l'un des deux éléments comporte une pièce transparente, la pièce étant intégrée dans la matière alvéolaire de l'élément formant une fenêtre pour permettre de voir le contenu de la boîte.

En général, l'un des éléments, c'est-à-dire le couvercle, comporte une ou plusieurs pièces transparentes formant une ou plusieurs fenêtres. Ces fenêtres peuvent avoir un contour rectangulaire, carré, rond, ou plus généralement géométrique. Il peut également s'agir d'une fenêtre à contour décoratif comme par exemple un ensemble de lettres transparentes ou de figures ou de logos.

La pièce transparente est rendue solidaire de la masse de la matière alvéolaire ; elle est donc inviolable et toute tentative d'ouverture de la fenêtre ne peut se faire que de manière destructive laissant des traces parfaitement visibles.

Le second élément de la boîte est un réceptacle, c'est-à-dire un élément ayant une certaine profondeur dans laquelle on place les produits à emballer ou un élément en forme de plateau sur lequel se place ou se fixe le ou les produits à emballer.

Bien que dans le cas le plus général la pièce transparente soit une surface plane, on peut également, pour des boîtes de forme particulière, ou de contenu particulier, faire passer la fenêtre qui occupe généralement le dessus de la boîte également sur l'un ou plusieurs côtés pour permettre une vue plus précise du contenu de la boîte. Cela peut également répondre à des impératifs commerciaux et/ou esthétiques.

La pièce transparente formant la ou les fenêtres peut recevoir des îlots partiels ou complets de la même matière alvéolaire que le restant de l'élément et cela en fonction de la forme que doit présenter la fenêtre. Ces îlots peuvent être les parties remplissant certaines lettres comme AOB, etc...Il est également possible, dans le cas où la boîte doit présenter de bonnes caractéristiques d'isolation, de constituer la pièce transparente par plusieurs épaisseurs ou nappes séparées par un intervalle d'air. Ces différentes nappes sont de préférence solidaires les unes des autres pour se manipuler comme une seule pièce pour leur mise en place dans le moule.

La boîte est de préférence réalisée en polystyrène expansé et la pièce transparente en polystyrène compact transparent.

L'expression « transparent » utilisée dans la présente description englobe les différents degrés de transparence entre un état plus ou moins translucide jusqu'à la transparence parfaite.

L'invention concerne également un moule pour la fabrication d'une boîte ou d'un élément de boîte tel que défini ci-dessus, ce moule composé de plusieurs parties étant caractérisé en ce que chacune de ses parties comprend une zone en surépaisseur par rapport aux autres surfaces du moule formant la cavité de moulage, les zones des deux parties du moule, en surépaisseur étant homologues et correspondant à la surface que doit présenter la fenêtre, ces deux zones, lorsque le moule est fermé, étant séparées d'un intervalle permettant de pincer la pièce transparente à intégrer dans l'élément de boîte.

Il peut être intéressant de munir les zones en surépaisseur avec des éléments en relief (léger relief) pour réaliser des traces ou des impressions sur la pièce transparente au cours du moulage.

Suivant une autre caractéristique avantageuse, le moule comporte plusieurs zones en surépaisseur, homologues, laissant entre elles des intervalles formant une cavité de moulage pour recevoir le matériau alvéolaire et réaliser plusieurs fenêtres occupées par une ou plusieurs pièces transparentes communes à plusieurs fenêtres.

Enfin, l'invention concerne également un procédé de fabrication d'une boîte de calage, ce procédé étant caractérisé en ce qu'on utilise un moule d'expansion dans lequel on place et on fixe une pièce transparente destinée à former la fenêtre de l'élément de boîte puis on introduit la matière alvéolaire dans la cavité du moule et on expanse.

La présente invention sera décrite ci-après de manière plus détaillée à l'aide de différents exemples de réalisation représentés schématiquement dans les dessins annexés dans lesquels :
- la figure 1 est une vue en coupe schématique d'une boîte à couvercle transparent selon l'état de la technique,
- la figure 2 est une vue en coupe schématique d'une boîte analogue à celle de la figure 1 mais dont le couvercle est relié par une articulation au réceptacle de la boîte,
- la figure 3 est un schéma d'une boîte selon l'invention,
- la figure 4 est une vue en coupe schématique d'une boîte à couvercle articulé selon l'invention,
- la figure 5 est une vue en coupe d'un couvercle de boîte à fenêtre isolante,
- la figure 6 est une vue en coupe d'une boîte dont l'élément recevant le couvercle est constitué par un plateau,
- la figure 7 est une vue en coupe du moule et du couvercle réalisé avec un tel moule,
- la figure 8 montre une autre variante de moule et du couvercle réalisé avec ce moule,
- les figures 9 et 10 sont des vues de dessus de couvercles montrant des formes diverses de fenêtres,
- la figure 11 montre un couvercle avec une fenêtre s'étendant sur le dessus et sur l'un des côtés.

Selon la figure 3, l'invention concerne une boîte de calage en matériau alvéolaire. Cette boîte est formée par exemple de deux éléments 10, 11 ; l'un (10) constitue le réceptacle recevant le produit P et l'autre (11), le couvercle. L'élément 11 comporte une pièce transparente 12 intégrée dans la matière alvéolaire de l'élément 11 par son bord 121 et formant ainsi une fenêtre 13. Cette fenêtre permet de voir le contenu P de la boîte 10, 11.

La figure 4 montre un autre mode de réalisation de boîte selon l'invention. L'élément 10A forme un réceptacle et l'élément 11A, un couvercle, ces deux éléments étant réunis par une charnière 14A. L'élément 11A est muni d'une pièce transparente 12A intégrée dans la fenêtre 13A.

Le mode de réalisation de la figure 5 concerne une particularité de couvercle 11B dont la fenêtre 13B est occupée par un élément transparent 12B formé de deux couches de matière transparente 122, 123, séparées par un intervalle d'air ou de vide 124. L'ensemble formé par les couches transparentes 122, 123 séparées par l'intervalle d'air 124 constitue un tout intégré tel quel dans la matière alvéolaire de l'élément 11B.

La figure 6 montre une variante dans laquelle le premier élément 10C est en forme de plateau avec une zone surélevée 101 pour réaliser une feuillure périphérique 102 dans laquelle vient se loger le bord 111 inférieur du second élément 11C muni également d'une fenêtre 13C occupée par une pièce transparente 12C intégrée par son bord dans la matière alvéolaire de l'élément 11C.

Les différents éléments constituant la boîte de calage en matériau alvéolaire sont de préférence en polystyrène expansé (PSE) et la pièce transparente 12, 12A, 121, 122 (12B) 12C est de préférence une feuille de polystyrène compact « cristal », c'est-à-dire de polystyrène transparent.

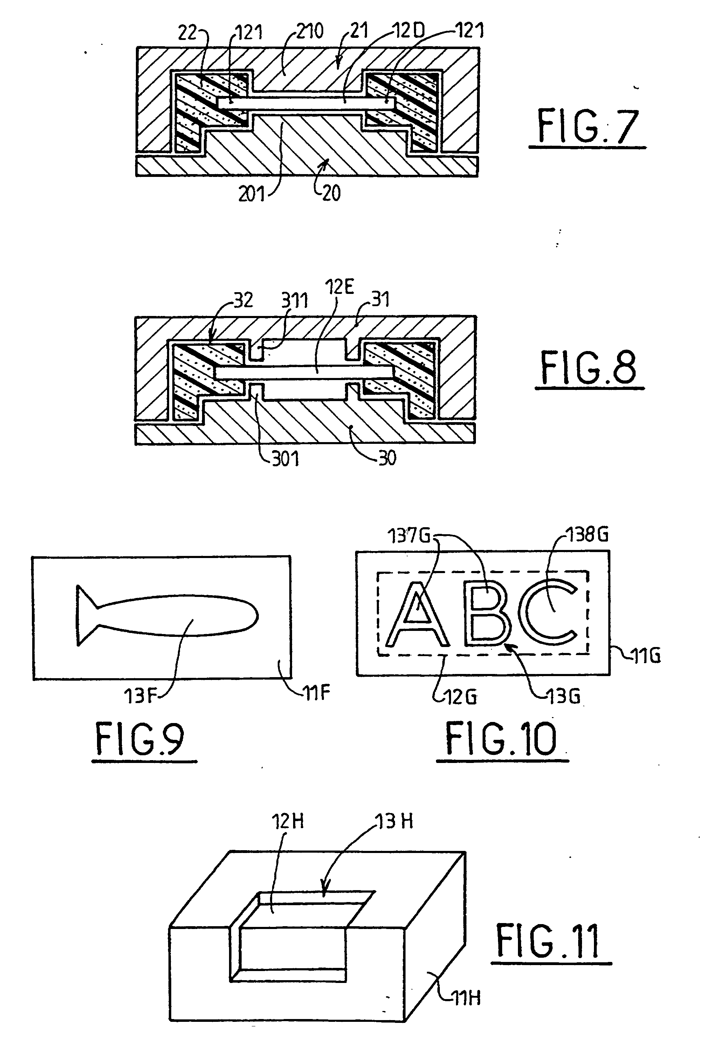

La figure 7 montre en coupe une première forme de moule en deux parties 20, 21, de formes complémentaires, définissant entre elles une cavité de moulage 22. Les deux parties 20, 21 du moule ont chacune une zone en surépaisseur 201, 210 séparées d'un intervalle lorsque le moule est fermé, cet intervalle correspondant sensiblement à l'épaisseur de la pièce transparente 12D destinée à être intégrée dans l'élément de matière alvéolaire que l'on veut réaliser.

On place tout d'abord la pièce transparente 12D dans le moule (par exemple sur la zone surélevée 201) en positionnant cette pièce 12D de manière précise et en la retenant en place par exemple par dépression, une ventouse ou un moyen analogue. Puis on referme le moule en mettant en place la seconde partie 21 du moule de manière à obtenir la cavité de moulage 22 dans laquelle on introduit la matière alvéolaire destinée à être expansée. Cette matière remplit toute la cavité 22 et enrobe ainsi le bord 121 de la pièce transparente 12D.

Après expansion on démoule et on obtient un élément à fenêtre comme ceux représentés aux figures 3, 4 ou 5 (dans ce dernier cas on remplace la pièce transparente 12D par une pièce à deux ou plusieurs couches 122, 123).

La figure 8 montre une autre forme de moule composée de deux parties 30, 31 ayant un bord 301, 311 entourant la partie donnant la fenêtre. Ces bords 301, 311 servent à retenir la pièce transparente 12E en cours de moulage de l'élément.

Une fois la pièce transparente 12E mise en place dans le moule, on introduit la matière expansée dans la cavité 32, on fait expanser puis on démoule.

Les figures 9 et 10 montrent des formes de fenêtres non géométriques ou polygonales. A la figure 9, la fenêtre a une forme de poisson 13F, par exemple dans un couvercle pour une boîte de calage contenant des poissons (élément 11F).

Dans le cas de l'élément 11G de la figure 10, la fenêtre 13G est constituée par trois lettres A, B, C. Ces fenêtres ont des îlots complets de matière alvéolaire 137G comme dans la lettre A ou partiels 138G comme pour l'intérieur de la lettre C. Ces îlots de matière 137G ou 138G sont en fait constitués par de la matière alvéolaire qui recouvre la zone correspondante de la pièce transparente 12G. Cette pièce transparente 12G peut avoir une forme rectangulaire indiquée par un contour en trait interrompu et occupant toute la surface correspondant aux lettres A, B, C.

La figure 11 montre un élément 11H avec une fenêtre 13H occupant le dessus et un côté de l'élément 11H. Dans ce cas, la pièce transparente 12H a une forme qui épouse la forme de la fenêtre, c'est-à-dire une forme de dièdre rectangle.

D'autres formes courbes ou tridimensionnelles sont envisageables.

En résumé, dans tous les cas, l'élément muni de la fenêtre conserve une grande partie de sa fonction de résistance aux chocs de support et d'isolation tout en permettant de voir le contenu de la boîte.

## Revendications

1. Boîte de calage en matériau alvéolaire, formée d'au moins deux éléments, tels qu'un réceptacle et un couvercle, dont l'un comporte une fenêtre,
**caractérisée par**
une pièce transparente (12), intégrée lors du moulage par expansion dans la matière alvéolaire d'au moins l'un (11) des deux éléments (10, 11) formant une fenêtre (13).

2. Boîte selon la revendication 1,
**caractérisée en ce que**
l'un des éléments est un plateau (10C) ou un réceptacle (10) et l'autre (11) un couvercle.

3. Boîte selon la revendication 1,
**caractérisée en ce que**
la pièce transparente est une pièce plane (12A) ou une pièce (12H) épousant une partie de la surface non plane de l'élément (11) dans lequel il est intégré.

4. Boîte selon la revendication 1,
**caractérisée en ce que**
la pièce transparente (12G) comporte des îlots partiels (138G) ou complets (137G) délimitant ou formant la fenêtre (13G).

5. Boîte selon la revendication 1,
**caractérisée en ce que**
la pièce transparente (12B) est formée d'une ou plusieurs épaisseurs (122, 123) de matière transparente séparées par un intervalle d'air ou de vide (124).

6. Boîte selon l'une quelconque des revendications précédentes,
**caractérisée en ce que**
les éléments sont réalisés en polystyrène expansé et la pièce transparente est du polystyrène compact cristal.

7. Moule d'expansion pour la fabrication d'une boîte ou d'un élément de boîte à pièce transparente, moule composé d'au moins deux parties,
**caractérisé en ce que**
chaque partie (20, 21) du moule comprend une zone en surépaisseur (201, 211) par rapport aux autres surfaces du moule formant la cavité de moulage (22), les zones (201, 211) des deux parties (20, 21) du moule, en surépaisseur étant homologues et correspondant à la surface que doit présenter la fenêtre, ces deux zones, lorsque le moule est fermé, étant séparées d'un intervalle permettant de pincer la pièce transparente (12D) à intégrer dans l'élément de boîte.

8. Moule d'expansion selon la revendication 7,
**caractérisé en ce que**
les zones en surépaisseur comportent des éléments en relief pour imprimer la pièce transparente lors du moulage.

9. Moule d'expansion selon la revendication 7,
**caractérisé en ce qu'**
il comporte plusieurs zones en surépaisseur, homologues, laissant entre elles des intervalles formant une cavité de moulage pour recevoir le matériau alvéolaire et former plusieurs fenêtres (ABC) occupées par une ou plusieurs pièces transparentes (12G) communes à plusieurs fenêtres.

10. Procédé de fabrication d'une boîte de calage selon l'une quelconque des revendications 1 à 6,
**caractérisé en ce qu'**
on utilise un moule d'expansion dans lequel on place et on fixe une pièce transparente destinée à former la fenêtre de l'élément de boîte, puis on introduit la matière alvéolaire dans la cavité du moule et on fait expanser.

## Patentansprüche

1. Schachtel aus geschäumten Material, bestehend aus wenigstens zwei Elementen, wie z. B. einem Bodenteil und einem Deckel, wovon eines ein Fenster aufweist,
**gekennzeichnet durch** ein bei der Formgebung **durch** Aufschäumen in das geschäumte Material wenigstens eines (11) der beiden Elemente (10, 11) eingefügtes durchsichtiges Teil (12), das ein Fenster (13) bildet.

2. Schachtel nach Anspruch 1, **dadurch gekennzeichnet, dass** eines der Elemente eine Platte (10C) oder ein Bodenteil (10) und das andere (11) ein Deckel ist.

3. Schachtel nach Anspruch 1, **dadurch gekennzeichnet, dass** das durchsichtige Teil ein ebenes Teil (12A) oder ein an einen Teil der nicht ebenen Fläche des Elements (11) angepasstes Teil (12H) ist, in das es eingefügt ist.

4. Schachtel nach Anspruch 1, **dadurch gekennzeichnet, dass** das durchsichtige Teil (12G) kleine unvollständig (138G) oder vollständig (137G) ausgebildete Inseln aufweist, die das Fenster (13G) begrenzen oder bilden.

5. Schachtel nach Anspruch 1, **dadurch gekennzeichnet, dass** das durchsichtige Teil (12B) aus einer oder mehreren Lagen (122, 123) eines durchsichtigen Materials gebildet ist, wobei letztere durch einen Luft enthaltenden oder luftleeren Zwischenraum (124) voneinander getrennt sind.

6. Schachtel nach Anspruch 5, **dadurch gekennzeichnet, dass** die Elemente aus aufgeschäumten Polystyrol bestehen und das durchsichtige Teil aus kompakten kristallinen Polystyrol besteht.

7. Aufschäumform zur Herstellung einer Schachtel oder eines Elements einer Schachtel mit einem durchsichtigen Teil, wobei die Aufschäumform aus wenigstens zwei Teilen besteht,
**dadurch gekennzeichnet,**
**dass** jedes Teil (20, 21) der Form einen in Bezug auf die anderen, den Formgebungshohlraum (22) bildenden Flächen der Form verdickten Bereich (201, 211) aufweist, wobei die verdickten Bereiche (201, 211) der beiden Teile (20, 21) der Form übereinstimmen und der Fläche entsprechen, die das Fenster aufweisen soll, wobei diese beiden Bereiche, wenn die Form geschlossen ist, durch einen Zwischenraum getrennt sind, der das Einklemmen des in das Schachtelelement einzufügenden durchsichtigen Teils (12D) ermöglicht.

8. Aufschäumform nach Anspruch 7, **dadurch gekennzeichnet, dass** die verdickten Bereiche erhabene Elemente aufweisen, um das durchsichtige Teil bei der Formgebung zu prägen.

9. Aufschäumform nach Anspruch 7, **dadurch gekennzeichnet, dass** sie mehrere übereinstimmend verdickte Bereiche mit Zwischenräumen dazwischen aufweist, die einen Formgebungshohlraum bilden, um geschäumtes Material aufzunehmen und mehrere Fenster (ABC) zu bilden, die durch ein oder mehrere, zu mehreren Fenstern gehörende durchsichtige Teile (12G) besetzt sind.

10. Verfahren zur Herstellung einer Schachtel nach einem der Ansprüche 1 bis 6, **dadurch gekennzeichnet,**
**dass** man eine Aufschäumform benutzt, in die man ein durchsichtiges Teil einsetzt und fixiert, das dazu bestimmt ist, das Fenster des Schachtelelements zu bilden, man dann das geschäumte Material in den Hohlraum der Form einbringt und es zum Aufschäumen bringt.

## Claims

1. Packaging box of cellular material, made up of at least two elements, such as a receptacle and a cover, one of which has a window,
**characterised by**
a transparent piece (12), integrated in the cellular material of at least one (11) of the two elements (10, 11) during the expansion moulding process to form a window (13).

2. Box as claimed in claim 1,
**characterised in that**
one of the elements is a tray (10C) or a receptacle (10) and the other (11) is a cover.

3. Box as claimed in claim 1,
**characterised in that**
the transparent piece is a flat piece (12A) or a piece (12H) conforming to the non-flat surface of the element (11) in which it is integrated.

4. Box as claimed in claim 1,
**characterised in that**
the transparent piece (12G) has partially isolated regions (138G) or totally isolated regions (137G) bounding or forming the window (13G).

5. Box as claimed in claim 1,
**characterised in that**
the transparent piece (12B) is made up of one or more thicknesses (122, 123) of transparent material separated by an air gap or vacuum (124).

6. Box as claimed in any one of the preceding claims,
**characterised in that**
the elements are made from expanded polystyrene and the transparent piece is made from compact crystal polystyrene.

7. Expansion mould for manufacturing a box or a box element incorporating a transparent piece, said mould comprising at least two parts,
**characterised in that**
each part (20, 21) of the mould has a zone with extra thickness (201, 211) compared with other surfaces of the mould forming the mould cavity (22), the zones (201, 211) of the two parts (20, 21) of the mould with the extra thickness being complementary and corresponding to the surface intended to incorporate the window, these two zones being separated by a gap when the mould is closed to enable the transparent piece (12D) to be integrated in the box element to be clamped.

8. Expansion mould as claimed in claim 7,
**characterised in that**
the zones of extra thickness are elements standing out in relief in order to impress the transparent piece during the moulding process.

9. Expansion mould as claimed in claim 7,
**characterised in that**
it has several complementary zones of extra thickness with gaps left free between them forming a mould cavity in order to receive cellular material and form several windows (ABC) occupied by one or more transparent pieces (12G) common to several windows.

10. Method of manufacturing a packaging box as claimed in any one of claims 1 to 6,
**characterised in that**
an expansion mould is used, in which a transparent piece intended to form the window of the box element is placed and fixed, after which the cellular material is introduced into the mould cavity and expanded.
